# EUROPEAN PATENT APPLICATION

(11) **EP 3 846 149 A1**
(43) Date of publication of application: **07.07.2021**
(21) Application number: 19306783.2
(22) Date of filing: 30.12.2019
(51) Int. Cl.: G09B 9/08, G09B 5/06

(54) **SYSTEM, METHOD AND COMPUTER PROGRAM PRODUCT FOR PROVIDING ADAPTIVE TRAINING**

(71) Applicant: Thales, 92400 Courbevoie (FR)
(72) Inventor: GAGNON, Jean-François, QC, Québec (CA); JAMES, Yannick, 95523 Cergy Pontoise Cedex (FR); LAFOND, Daniel, Québec, QC G1E 0B9 (CA)
(74) Representative: Marks & Clerk France

(57) **Abstract**

A computer-implemented method for providing adaptive training is disclosed. The method comprises the steps of assessing a level of ease of a user during a training mission; segmenting the training mission into learning phases, wherein a learning phase comprises maneuvers and/or procedures to be performed; associating each learning phase of the training mission with predefined skills required to perform the respective maneuvers and/or procedures; quantifying skill acquisition of the user for each learning phase using the level of ease of the user; and generating training cursus recommendations adapted to the user to acquire for each learning phase the predefined skills which are not quantified as mastered for the user.

## Description

### Field of the Invention

The present invention relates to the field of simulation and more particularly to a system, method and computer program product for providing adaptive training.

### Background Art

Training of individuals, would it be to become a professional or to maintain or upgrade competencies, generally relies on spending hours in simulators to acquire skills. In real situation of training in simulators, a trainee A may acquire rapidly a set of skills (say Skill A) but may encounter difficulties in acquiring another set of skills (say Skill B). Conversely, a trainee B may acquire rapidly the set Skill B, but may be challenged by the set Skill A. So, each trainee is unique and has specific skills and abilities acquisition challenges. There is thus a need to provide adaptive training methods that fit individual requirements of the trainees.

Existing training cursus are mostly of the type "one size fits all" meaning that all trainees are typically exposed to the same amount of time practicing each skill to be acquired. In order to boost effectiveness of training procedure, many researchers and practitioners advocate for individualized learning, that is rendered possible by adaptive training cursus.

The domain of adaptive training is much documented and several researchers have published papers related to this topic. From an academic point of view, most of the work concerns the assessment of trainees' progression or cognitive state using passive brain computer interfaces and similar techniques. Another realm of research focuses on demonstrating the benefits of adaptive training.

The articles below provide some references on this topic:
- M. Spüler, T. Krumpe, C. Walter, C. Scharinger, W. Rosenstiel, and P. Gerjets, "Brain-Computer Interfaces for Educational Applications," in Informational Environments, J. Buder and F. W. Hesse, Eds. Cham: Springer International Publishing, 2017, pp. 177-201.
- P. Gerjets, C. Walter, W. Rosenstiel, M. Bogdan, and T. O. Zander, "Cognitive state monitoring and the design of adaptive instruction in digital environments: lessons learned from cognitive workload assessment using a passive brain-computer interface approach," Frontiers in Neuroscience, vol. 8, Dec. 2014.
- J. Mark, N. Thomas, A. Kraft, W. D. Casebeer, M. Ziegler, and H. Ayaz, "Neurofeedback for Personalized Adaptive Training," in Advances in Neuroergonomics and Cognitive Engineering, vol. 586, C. Baldwin, Ed. Cham: Springer International Publishing, 2018, pp. 83-94.
- C. Walter, W. Rosenstiel, M. Bogdan, P. Gerjets, and M. Spüler, "Online EEG-Based Workload Adaptation of an Arithmetic Learning Environment," Frontiers in Human Neuroscience, vol. 11, May 2017.
- A. Fortin-Côté, D. Lafond, M. Kopf, J.-F. Gagnon, and S. Tremblay, "Toward Adaptive Training Based on Bio-behavioral Monitoring," in Augmented Cognition: Intelligent Technologies, vol. 10915, D. D. Schmorrow and C. M. Fidopiastis, Eds. Cham: Springer International Publishing, 2018, pp. 34-45.

The following patents disclose several training adaptive methods:
- US9786193B2 from Mark Falash et al. and titled "Adaptive training system, method and apparatus".
- CA2963254C from Jean-Francois Delisle titled "Contextual monitoring perspective selection during training session".
- US2016293037 from Francis Jacques et al. and titled "Method and system for generating an interactive training scenario based on a recorded real time simulation."

However, there is no work joining both types of research, i.e. progression and benefits into a single solution, and particularly for the training of aircraft pilots. Moreover, all known solutions are only applicable in simulation environment, none of the prior art methods explicitly disclose a potential application to real flights.

In fact, in a dynamic and uncertain environment like when flying a fighter plane, pilots must be prepared to react to unexpected situations and engage supplementary cognitive resources in order to adapt and overcome. As such, an important part of military pilot training is to appreciate the unpredictable nature of the mission. For the instructor, identifying the precise moment to move from an expected to an unexpected situation is critical, as the change must only be operated once the trainee has acquired the fundamentals of the flight, that is to say a set of knowledge devoted to maintaining the aircraft in a safe area (i.e., maintain altitude, heading, etc.). Otherwise, if unexpected changes are brought too early in the training, the student will not integrate the basis, and will not reach the optimal targeted state which is referred to as "ease in flight". In fact, the opposite might be observed as excessive demand on resources imposed by the attended task(s) typically results in performance degradation. On the contrary, a delayed addition of unexpected situations will have no benefit and inefficiently extend the training time. Currently, instructors exclusively rely on their experience and subjective observations to detect this key moment.

There is a need for an adaptive training method that is operative both in simulators and during real missions.

Furthermore, all the known approaches have the drawback of evacuating the instructor from being an active member of the whole learning loop.

There is thus the need for a solution to solve the aforementioned problems.

### Summary of the invention

Accordingly, an object of the invention is to provide a computer implemented method for adaptive training of individuals.

Another object of the invention is a computer implemented adaptive method for the training of aircraft pilots inflight and in simulator.

Advantageously, the invention allows individualization of training to the specific needs of each trainee. Skills from a training cursus that are required to perform a given task are mapped with a scenario or mission timeline, which is itself mapped to an "ease in flight" curve of the trainee, and therefore to a level of mastery of these skills.

Another object of the invention is a system for providing recommendations to both a trainee and an instructor. Suggestions are sent to an instructor to indicate which key skills (and associated abilities) are to prioritize for an identified trainee and to indicate which scenario fits best for practicing those key skills. A trainee receives as well information on his/her cursus progression and features of his/her individual profile.

Advantageously, the invention allows that real mission performance data may be associated with predefined skills by having a correspondence integrated between a cursus of skills to the real mission of the trainee while having an instructor being actively involved in the loop of the training cursus of a trainee.

Advantageously, the method is applicable in technical domains relating to recommendation systems, individualization of learning, i.e. adaptive learning, which preferably are, but not limited to, aeronautics.

Advantageously, the invention is an adaptive training method that allows decreasing a required amount of time to reach equivalent levels of expertise (or augmenting skill level for same amount of time spent in training). Consequently, the application of the method of the invention in training, allows decreasing trainee's attrition thanks to better performance acquisition during the training.

Further advantages gained by the invention are better training outcomes, economic benefits because of reduced time and reduced attrition which are associated to decreased costs. This is especially true in domains where training is mandatory but costly, such as in aeronautics.

Another advantage of the present invention relies on having one instructor supervising more trainees than with prior art methods.

To achieve the foregoing object, a system, method and computer program product as further described in the appended independent claims 1, 12 and 13 are provided.

Particularly, a computer-implemented method of providing adaptive training to a user comprises the steps of:
- assessing a level of ease of a user during a training mission;
- segmenting the training mission into learning phases, wherein a learning phase comprises maneuvers and/or procedures to be performed;
- associating each learning phase of the training mission with predefined skills required to perform the respective maneuvers and/or procedures;
- quantifying skill acquisition of the user for each learning phase using the level of ease of the user; and
- generating training cursus recommendations adapted to the user to acquire for each learning phase the predefined skills which are not quantified as mastered for the user.

In an embodiment, a psychophysiological model of expertise is used as part of the cursus recommendation system of the present invention for quantifying skill acquisition using physiological parameters, and for augmenting efficiency of training of navigating personnel.

The invention also provides a system for providing adaptive training to a user, comprising means adapted to carry out the steps of the method.

Generally, the cursus recommendation system of the invention relies on the identification of different phases/components of a mission, using contextual measures. Advantageously, the system allows associating each phase/component with a physiological response of a trainee, and providing support to an instructor when assigning a specific exercise or mission, based on previous observations.

As such, in the context of flight training for a given flight, the cursus recommendation system allows:
- identifying every relevant phase (maneuver or procedure) in the flight performed by a trainee;
- assessing the ease in flight of the trainee during each of these specific elements, based on his/her physiological response; and
- based on the conjunction of the ease in flight and the required skills to perform each element, providing a cursus recommendation to target specifically the skills which are not mastered by the trainee.

The invention may also be provided as a computer program product comprising a computer readable storage medium, and program code stored on the computer readable storage medium configured, upon execution, to cause the processor to operate the steps of the method.

Further aspects of the invention will now be described, by way of preferred implementation and examples, with reference to the accompanying figures.

### Brief description of the drawings

The above and other items, features and advantages of the invention will be better understood by reading the following more particular description of the invention in conjunction with the figures wherein:
Fig. 1 is a general block diagram of the system of the present invention in accordance with an embodiment;
Fig. 2 is a detailed block diagram of the cursus recommender of the present invention in accordance with an embodiment;
Fig. 3 shows a timeline illustrating progression curves as shown to instructors and trainees in accordance with an embodiment of the present invention;
Fig. 4 shows a workflow run by a trainee after a flight in accordance with an embodiment of the present invention;
Fig. 5 shows a workflow run by an instructor before a flight in accordance with an embodiment of the present invention; and
Fig. 6 exemplifies a screenshot of a user interface in accordance with an embodiment of the present invention.

### Detailed description of the invention

It is to be appreciated that same elements are referenced by same numerals throughout all figures.

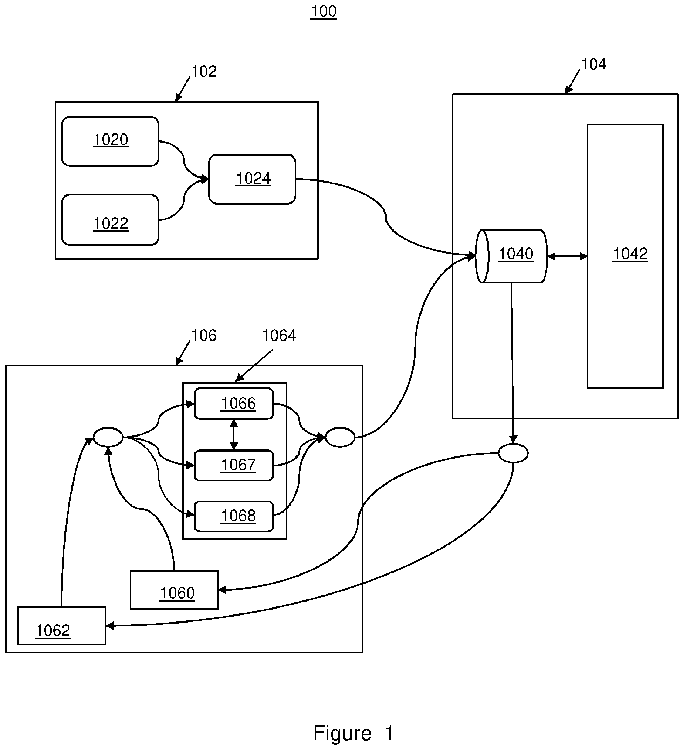

Going first to figure 1, a general block diagram of the system of the present invention in accordance with an embodiment is depicted. Generally, system 100 comprises at least an acquisition unit 102, a cursus recommendation unit 104, and an interface unit 106.

The description is provided for a preferred embodiment in the context of flight training. However, the person skilled in the art may adapt the principles described to other technical domains.

Whereas not shown, the system is implemented in one or a plurality of computer systems allowing operating a training session in a simulation environment or during a real mission, such as during real flight for example.

The proposed solution leverages on crew monitoring technologies, capable of assessing trainee's progress using physiological data captured by specialized sensors during a training session. As such, the acquisition unit 102 comprises a physiological data sensing unit 1020, a flight data sensing unit 1022 and a processing unit 1024, called "ease in flight" processing unit.

The physiological data sensing unit 1020 may comprise a plurality of sensors allowing capturing during a training session, physiological parameters of a trainee, such as for example Electrocardiogram (ECG) sensors, breathing sensors for capturing heart rate, heart rate variability, breathing rate. The sensors may be any type of known COTS (Commercial Off-The-Shelf) solutions, such as wearables or similar components configured to capture physiological data. The physiological sensors are preferably connected wirelessly (Bluetooth in flight, wifi ...) to the processing unit, while wire links may not be excluded (in simulators. The outputs of the plurality of physiological sensors are defined as being "Bio data" output.

The flight data sensing unit 1022 may comprise a plurality of sensors allowing the capture during a training session of a plurality of operational parameters relative to the flight. The flight data may be acquired during a real flight through real sensors such as inertial navigation unit having GPS, Gyros, Accelerators, or may come from simulator's parameters during a training session in a simulator. The flight sensors are preferably connected wirelessly (Bluetooth in flight, wifi ...) to the processing unit, while wire links may not be excluded. The outputs of the plurality of flight sensors are defined as being "Flight data" output.

The Bio data and the Flight data are the inputs of the ease in flight processing unit 1024 which is configured to collect and process the data received.

In an embodiment, the processing unit implements a Thales developed technology named "Sensor Hub" which allows integrating and interpreting data from multiple sensors mounted on individuals performing their work to derive metrics pertaining to individuals' functional state, and which allows passively and actively capture data about the individual's immediate environment (mission or flight data).

The processing unit is based on a crew monitoring concept having built-in models and decision rules (to be calibrated and validated using experimental data), allowing specifying relationships/rules as necessary to adjust to new contexts, or to different functional state concepts such as the ease in flight concept. The ease in flight processing unit 1024 is configured to integrate the signals from the sensors and to interpreter the data to derive higher level concepts.

In a preferred embodiment, the ease in flight processing unit 1024 is based on a known psychophysiological evaluation model called "ease in flight" model which is described in the following articles of the inventors:
- V. Ferrari, J.-F. Gagnon, C. Camachon, and M. Kopf, "Psycho-Physiological Evaluation of the Pilot: A Study Conducted with Pilots of the French Air Force," in Engineering Psychology and Cognitive Ergonomics, vol. 10906, D. Harris, Ed. Cham: Springer International Publishing, 2018, pp. 285-295.
- J.-F. Gagnon, O. Gagnon, D. Lafond, M. Parent, and S. Tremblay, "A Systematic Assessment of Operational Metrics for Modeling Operator Functional State:," in Proceedings of the 3rd International Conference on Physiological Computing Systems, Lisbon, Portugal, 2016, pp. 15-23.
- J.-F. Gagnon, D. Lafond, M. Rivest, F. Couderc, and S. Tremblay, "Sensor-Hub: A real-time data integration and processing nexus for adaptive C2 systems," in Proceedings of the sixth international conference on adaptive and self-adaptive systems and applications, 2014, pp. 63-67.
- O. Gagnon, M. Parizeau, D. Lafond, and J.-F. Gagnon, "Comparing methods for assessing operator functional state," in 2016 IEEE International Multi-Disciplinary Conference on Cognitive Methods in Situation Awareness and Decision Support (CogSIMA), San Diego, CA, USA, 2016, pp. 88-92.

This model is used for quantifying trainee progression data using physiological parameters. In an embodiment, heart rate, respiration rate, and heart rate variability were sampled on 11 pilots (5 students "novice" and 6 instructors "experts") performing 6 one-hour flights (5 flights in tandem: one instructor with one trainee + one instructor flying alone). The results show that roles had a statistically significant impact on physiological parameters. Results regarding all three variables suggested that flight phases have a significant effect on physiological parameters. The results obtained also highlighted a significant effect of the interaction of the role and phase on the respiration rate (in bpm). The data presented above was used for the development of a prediction model computing the probability of a pilot being an expert (instructors) or a novice (student). The continuous metric (probability) is referred to as an indicator of ease in flight. Indeed, the assumption was made that instructors were at ease during their flights, and that students were not. The model consists in a logistic regression, based on heart rate (bpm), respiration rate (bpm), and heart rate variability (ms).

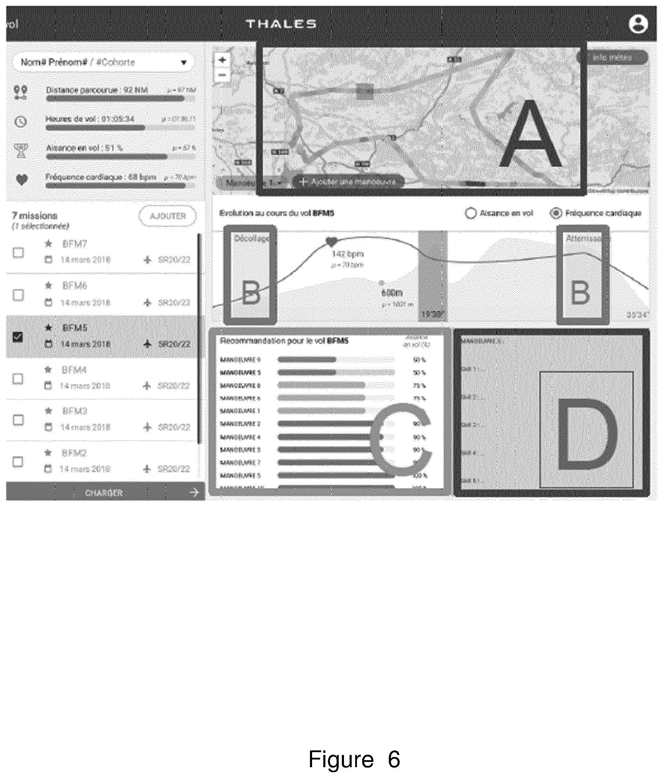

The output of the ease in flight processing unit 1024 provides trainee ease in flight level also defined as ease in flight assessment or estimation of the trainee throughout a whole flight. In an embodiment, the processing unit allows computing at 1 Hz, providing a very detailed assessment of the trainees' ease in flight state during the flight. This information is represented notably on area 'A' of a screenshot mockup on Figure 6. In an embodiment, the path followed during a flight is associated with colored points (from green to red) indicating the level of ease during the training mission at each moment, based on the physiological measures.

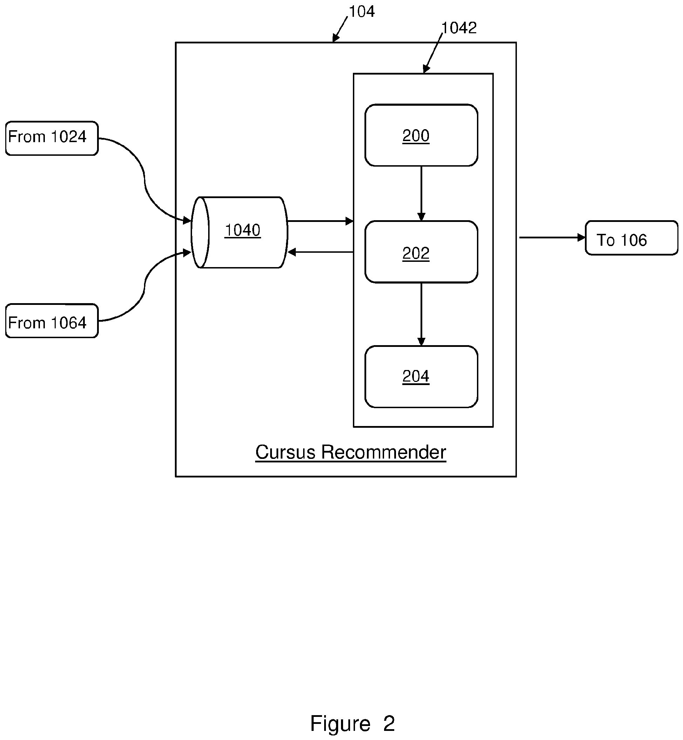

Data used by the ease in flight processing unit 1024 also includes mission or flight data, such as geolocation data (latitude, longitude, altitude), accelerations (x, y, z in g), and velocity (inferred from geolocation data). These mission data are later used by the cursus recommender as further described with reference to figure 2, for a decomposition of the flight into learning phases and a classification of the phases into maneuvers and procedures, as represented notably on area 'B' ("Decollage", "Atterrissage") of the screenshot mockup on the Figure 6.

The trainee progression data is sent to a secured Database 1040 of the Cursus Recommendation unit 104 to be contextualized and processed to provide recommendations on various aspects of the training to improve, as further detailed with reference to figure 2.

The interface unit 106 is defined as being composed of a trainee interface unit 1060 to be used by a trainee, an instructor interface unit 1062 to be used by an instructor, and a user inputs unit 1064 for receiving inputs from the instructor and the trainee. Preferably, each interface unit 1060, 1062 offers a web based input and visualization interface that is connected wirelessly to the cursus recommendation unit 104.

The trainee interface unit 1060 allows a user/trainee to input trainee parameters to define/create or to update a trainee profile 1068. The inputs are collected at the user inputs unit 1064. The trainee profile parameters are required to track progress of the trainee throughout multiple sessions.

The trainee interface unit 1060 is also used after a training session to enable uploading trainee data to the cursus recommendation database 1040. The trainee interface unit is further used to ensure that the user authorizes the transmission of his/her personal data. The trainee data are preferably sent wirelessly (wifi) to the secured database 1040.

On the visualization side, the trainee interface unit 1060 is configured to display after a session, information that is stored in the secured database 1040. A trainee may thus visualize his/her cursus progression, and is provided with recommendations for his/her individual training, as represented notably on area 'C' ("Recommandations pour le vol BFMS") of the screenshot mockup on Figure 6.

In an embodiment, the interface displays a time scaled graph, where both ease in flight (%) and altitude (meter) are plotted throughout the flight. The interface allows the user to select a specific point on the graph by clicking on it to get information about altitude, time since beginning of the mission, distance covered, heart rate and ease in flight at this specific moment. The interface further allows focusing on a specific flight segment, using a selection tool, and selecting the segment of interest on the map to highlight the corresponding points on the ease in flight /altitude graph underneath the map. Since the interface is conceived as a tool for trainees and for their instructors, it also provides general statistics concerning the missions performed by a trainee (distance covered, time, average ease in flight), with comparison to those of the cohort.

Recommendations are based on the quantification of "ease in flight" for each of the phase and maneuver recognized by the cursus recommendation system 104. In an embodiment as represented, the maneuvers are listed from the ones with the lowest ease in flight (i.e. maneuver 9) to the highest (i.e. maneuver 10). Then, by selecting a maneuver, the interface offers an area for the trainee (and similarly for the instructor on the instructor interface) to better understand the underlying skills that need to be improved in priority in order to increase ease in flight during later flights for this maneuver. The recommendation area is represented notably by area 'D' of the screenshot mockup on Figure 6.

In addition to the single flight representation shown in Figure 6, in a variant the system can represent multiple flights and provide recommendations based on a series of flights instead of only one. A trainee may represent the progression of his/her ease in flight throughout multiple flights on a single maneuver, such as take-off, for instance.

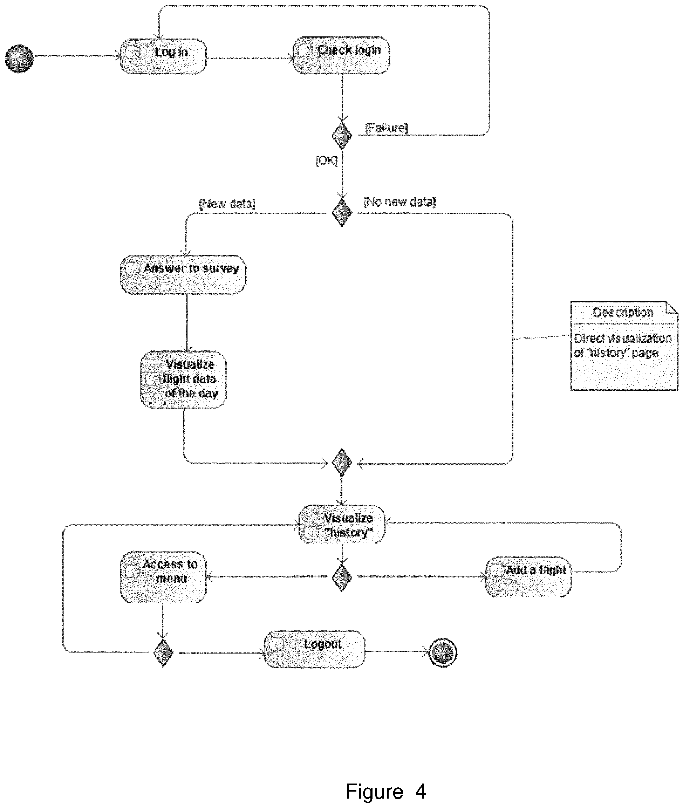

Figure 4 shows a workflow as run by a trainee after a training flight mission in accordance with an embodiment of the present invention, wherein as can be seen, after log in through the trainee interface, the trainee may visualize flight data, cursus progression, recommendations, historical data. The trainee may also enter new data to his/her user profile 1068 and/or may check-in for a new flight.

Referring back to figure 1, the instructor interface unit 1062 allows an instructor to easily input and visualize data. Advantageously, and in contrast to prior art solutions, an instructor is involved and full part of the learning process of a trainee. The instructor is provided with a dedicated instructor interface allowing him to easily define and use a list of students, a list of available missions or scenario (names, aircraft type, projected distance), an aircraft, to input cursus parameters 1066, scenario parameters 1067, to define relationship between the cursus parameters and the scenario parameters. In a preferred embodiment, the screen of the instructor interface is similar to the one available for trainees, with additional features allowing the instructor to upload new data.

In an embodiment, the instructor interface allows instructors to have a general view of a cohort via a single dashboard representing every flight for every trainee of a given cohort/promotion. In an embodiment, a set of colors is used to rate the cohort, and allow the instructor to see one student per row, and one flight per column. The color indicates the level of ease in flight achieved by a given trainee, on a given flight, and can be easily compared with the other trainees.

The cursus parameters are defined by the general skills that the trainees need to acquire and practice for a specific procedure. The skills may be clustered into different categories such as Execution skill, Mental skill, Physical skill and Required checklists skill. In the context of flight training, for the engine start procedure, some skills to acquire are for example: skill to start engine; skill to navigate on landing strip; skill for landing; skill for take-off. So, all the skills that a trainee has to practice and test during a session are not specific to a pilot but are common skills for all trainees. This information is then predefined and entered in the system prior to the flights. Indeed, if there are 10 flights planned during a semester, the set of skills to be practiced for these flights are predefined before the beginning of the training sessions. In a preferred embodiment, each skill is associated to one or several abilities, such as for example, the skill "start engine" may be associated to the ability "stress management", or the skill "navigate on landing strip" may be associated to the ability "decision making". The person skilled in the art would define any association of skill with ability required for a specific context of use of the system of the invention.

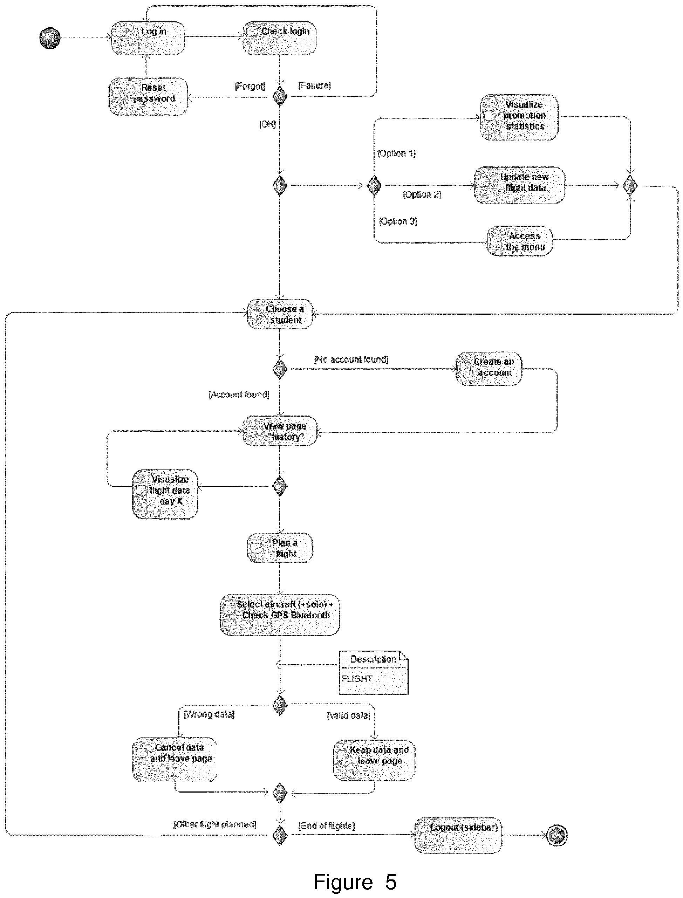

Figure 5 shows a workflow as run by an instructor before a flight session in accordance with an embodiment of the present invention. As can be seen, after a log in procedure, the instructor is offered through the instructor interface a series of options to visualize statistics, to update new flight data, to access a menu. The instructor may choose an existing trainee or create an account for a new one, and then enters a cursus/scenario subprocess to declare a flight, select an aircraft and describe the flight, i.e. the cursus parameters, the scenario parameters and the relationship between the two.

The scenario or mission parameters are defined per flight, and for each flight, a flight timeline is decomposed into flight components or flight learning phases. For instance, a particular flight may be segmented into the following flight components: (1) take-off; (2) cruise; (3) acrobatic; (3.1) looping; (3.2) lossey-8; (4) cruise and (5) landing. This is only an example for clarity of the description, but the person skilled in the art understands that any segmentation of a training mission (i.e. a flight or any other mission) may be defined for the purpose of operating the invention in each context where the training occurs.

The instructor has also to define the link between the scenario parameters 1067 and the cursus parameters 1066. To achieve the relationship, the instructor associates the skills (and abilities) that are required to accomplish each of the scenario parameters. It has to be understood that one or several scenario parameters may be associated to a given cursus parameter, and vice versa.

Finally, the user inputs unit 1064 provides contextual data that are sent to the secured Database 1040 of the Cursus Recommendation unit 104, and to be processed as further detailed with reference to figure 2.

Figure 2 is a detailed block diagram of the cursus recommendation unit 104 of the present invention in accordance with an embodiment wherein the cursus recommendation unit comprises a secured database 1040 and a cursus progression computing unit 1042.

In operation, after a training session, the cursus recommendation unit 104 receives data from the acquisition unit 102, and more specifically data provided by the ease in flight processing unit 1024, and data from the user inputs unit 1064. The data received from the previous flights are stored in the secured database 1040, and used by the cursus progression computing unit 1042.

The objective of the recommendation system is to make adapted recommendations to trainees and instructors based on trainee's ease-in-flight. The recommendation is based on the identification of flying skills that are not yet mastered. For this, the system must be able to recognize flight phases and maneuvers, to associate these with key skills, and provide an objective assessment. The function of the cursus progression computing unit 1042 is to compute a cursus progression of a trainee with regard to physiological data, flight data, and contextual data.

In a preferred embodiment, the cursus progression computing unit 1042 comprises a "flight-to-scenario" mapping unit 200, a "labeled flight-to-cursus" mapping unit 202 and a "cursus progression evaluation" unit 204.

The "flight-to-scenario" mapping unit 200 is configured to label a flight (stored as flight data) with a scenario file and/or a flight plan (stored as context data). The labelling occurs at fixed timeslot intervals using a phase identification model. This step allows generating a flight labeled with scenario parameters. It is also noticeable that flights including more acrobatics and specific maneuvers can be decomposed with a finer grain, with the same process.

It has to be appreciated that the 'labelling' is made automatically using the flight phase classification defined (i.e. decomposition of a flight into different phases or maneuvers) with maneuvers detection algorithms. The algorithms (logistic regressions) use inputs such as velocity, accelerations, and aircraft position to detect maneuvers and flight phases. This processing is performed on the data received after a flight. The resulting output is a classification that labels and characterizes the phase and maneuver for each of the data point in time (or timeslot) during the flight.

The labelled output of the "flight-to-scenario" mapping unit 200 is input to the "labeled flight-to-cursus" mapping unit 202 which is configured to associate each fixed timeslot or data point of the executed flight (i.e. the labelled flight) to the required skills (stored as the cursus data) for the planned training. The output is a flight labelled with cursus elements.

In an embodiment, the association is done using the information from a predefined skills table received from the instructor inputs and stored in the secured database 1040. The skills table contains information about the skills required for performing the different possible maneuvers and flight phases. Because the previous step enabled the identification of maneuvers, and because the skills table contains information about the skills required for a given maneuver, the "labeled flight-to-cursus" mapping unit 202 identifies a timeline of "required skills" for the duration of the flight.

In an embodiment, the association of skills and flight maneuvers is made using an ease in flight model (relying on a logistic function) to assess the level of ease at which the flight is performed by the trainee, every second. The model runs through three granularity levels, from the most generic and conceptual skill set to the most specific and applied skill set. Each of the granularity levels relies on the mapping of skills and their association with flight elements (procedures and maneuvers). In an embodiment, the three levels of granularity are (1) General skills level; (2) Situation awareness level; (3) Piloting (Role) skills level.

Depending on the type of recommendation required, the system allows to "view" the flights in terms of general skills, situational awareness levels, and piloting skills. Through these views, the system allows to provide "ease-in-flight" and other physiological metrics for specific elements. For instance, the system allows analyzing a given flight in terms of "perception", "comprehension", and "projection" levels of situational awareness, and informing the trainee that he/she masters perception and comprehension levels (based on the ease-in-flight metrics), but that he/she still has to train "projection" levels.

Finally, the flight labelled with cursus elements is input to the "cursus progression evaluation" unit 204 which is configured to associate trainee's psychophysiological progression with the required skills of the cursus, and generate metrics of ease in flight for a given skill, or flight phase.

The mapping of the skills to specific maneuvers is critical for the recommendation system. Indeed, as described earlier, the recommendation system algorithm is based on the identification of the flight maneuvers or phases, the quantification of the associated ease in flight, and then the priorization of skills associated with the lowest ease in flight, based on the mapping between phases/maneuvers and required skills.

The trainee's physiological progression is calculated for every data point during the flight (the ease in flight metric is calculated every second).

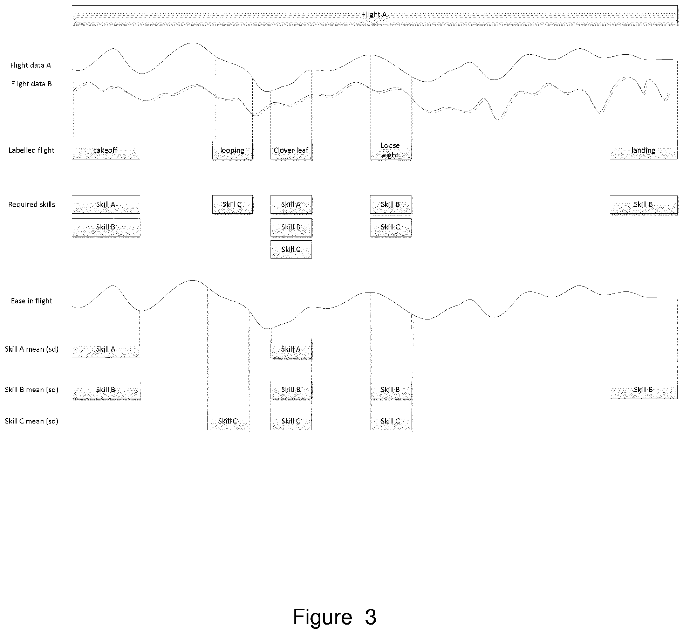

Figure 3 is an example of a timeline for a flight A showing progression curves as shown to instructors and trainees in accordance with an embodiment of the present invention. The flight is decomposed into 5 learning phases labeled takeoff - looping - clover leaf - loose eight - landing. Each phase is defined as requiring one or more specific skills (and abilities): Skill A; Skill B; Skill C. The user (instructor or trainee) visualizes the cursus progression and profile elements, as well as detailed flight information (e.g., hearth rate and ease in flight) every N seconds.

As described, the invention solves the problem of individualized training by linking an autonomous and objective evaluation of trainee's progress to specific skills and abilities to be achieved during training. It is therefore possible to identify skills, and abilities that require additional practice, in greater granularity than is actually feasible. The main advantages of the invention are:
- an objective evaluation of progress;
- an automated evaluation of progress;
- showing trend with historical data;
- progress is linked with skills;
- assessment is done during real training exercises (flight or simulator) rather than being theoretical;
- scenario timeline decomposed into skills and abilities;
- instructor remains in the loop.

The person skilled in the art will appreciate that an embodiment has been presented for purposes of illustration and description, and is not intended to be exhaustive nor limiting the invention in the form disclosed. Many modifications and variations will be apparent to those of ordinary skill in the art. The embodiment was chosen and described in order to best explain the principles of the invention, the practical application, and to enable others of ordinary skill in the art to understand the invention for various embodiments with various modifications as are suited to the particular use contemplated. The present invention can take the form of a computer program product accessible from a computer-usable or computer-readable medium providing program code for use by, or in connection with a computer or any instruction execution system.

## Claims

1. A computer-implemented method of providing adaptive training to a user, the method comprising the steps of:
- assessing a level of ease of a user during a training mission;
- segmenting the training mission into learning phases, wherein a learning phase comprises maneuvers and/or procedures to be performed;
- associating each learning phase of the training mission with predefined skills required to perform the respective maneuvers and/or procedures;
- quantifying skill acquisition of the user for each learning phase using the level of ease of the user; and
- generating training cursus recommendations adapted to the user to acquire for each learning phase the predefined skills which are not quantified as mastered for the user.

2. The method of claim 1 wherein the step of assessing a level of ease of a user during a training mission comprises the steps of collecting physiological data and data relative to the training mission, and processing the collected data to evaluate a level of ease of the user.

3. The method of claim 2 wherein the step of processing the collected data enforces a psychophysiological evaluation model for generating trainee progression data using physiological parameters, such as heart rate, respiration rate and heart rate variability.

4. The method of anyone of claims 1 to 3 wherein the step of segmenting the training mission into learning phases, comprises the steps of decomposing the duration of the training mission over a timeline having timeslots of learning segments.

5. The method of anyone of claims 1 to 4 wherein the step of associating each learning phase of the training mission with predefined skills required to perform the respective maneuvers and/or procedures, comprises the steps of linking each learning phase with all predefined skills required to accomplish said learning phase, wherein the required skills are predefined by an instructor of the training.

6. The method of anyone of claims 1 to 5 wherein the step of quantifying skill acquisition of the user for each learning phase, enforces using a psychophysiological model running on three granularity levels.

7. The method of anyone of claims 1 to 6 wherein the step of providing training cursus recommendations comprises the step of providing recommendations from the learning phase having the lowest quantified skill acquisition to the learning phase having the highest quantified skill acquisition.

8. The method of anyone of claims 1 to 7 further comprising the step of displaying the training cursus recommendations on a user interface.

9. The method of claim 8 wherein the training mission is a flight training mission.

10. The method of claim 9 wherein the training mission is realized either in a simulator or as a real flight.

11. The method of claim 9 or 10 wherein the level of ease of a user is an ease in flight level assessed by an ease in flight model during a flight training mission.

12. A computer program comprising instructions for carrying out the steps of the method according to any one of claim 1 to 11 when said computer program is executed on a suitable computer device.

13. A system comprising means adapted to carry out the steps of the method according to any one of claims 1 to 11.
